# EUROPÄISCHE PATENTANMELDUNG

(11) **EP 2 157 446 A1**
(43) Veröffentlichungstag der Anmeldung: **24.02.2010**
(21) Anmeldenummer: 09000589.3
(22) Anmeldetag: 16.01.2009
(51) Int. Cl.: G01S 17/74, G06K 19/06

(54) **Sensorvorrichtung sowie Verwendung einer Sensorvorrichtung**

(30) Priorität: 18.08.2008 DE 102008038298
(71) Anmelder: Cedes AG, 7302 Landquart (CH)
(72) Erfinder: Albers, Bas, 7000 Chur (CH); Nebiker, Peter, 7208 Malans (Graubünden) (CH); Beyer, Stephan, 7214 Seewis-Schmitten (CH)
(74) Vertreter: Dobler, Markus

(57) **Zusammenfassung**

Es wird eine Sensorvorrichtung (1) bestehend aus einem optischen Sender (4, 5, 9, 10, 22), einem Reflektor (14, 14a) und einer Empfangseinheit (9, 10, 21) vorgeschlagen.

Erfindungsgemäß sendet der optische Sender (4, 5, 9, 10, 22) Licht aus, das spezifisch vorgegebene optische Eigenschaften besitzt. Vor dem Reflektor (14, 14a) ist eine optisch aktive Modulationsschicht (13) angeordnet ist, die die Polarisation und/oder Wellenlänge des an die Empfangseinheit (9, 10, 21) über den Reflektor (14, 14a) zurückreflektierten Lichts ändert. Außerdem werden optische Schlüssel vorgeschlagen.

## Beschreibung

Die Erfindung betrifft eine Sensorvorrichtung nach dem Oberbegriff des Anspruchs 1 sowie die Verwendung einer Sensorvorrichtung.

### Stand der Technik

Es sind eine Vielzahl von Sensorvorrichtungen zur Identifizierung von Objekten bekannt. Dazu werden beispielsweise RFIDs, Magnetstreifen, Lochkarten oder biometrische Verfahren, wie zum Beispiel die Gesichtsfelderkennung verwendet.

### Aufgabe und Vorteile der Erfindung

Der Erfindung liegt die Aufgabe zugrunde, eine alternative Sensorvorrichtung zur Identifizierung von Objekten bereitzustellen. Diese Aufgabe wird durch die Merkmale des Anspruchs 1, 15 und 16 gelöst.

In den abhängigen Ansprüchen sind vorteilhafte und zweckmäßige Weiterbildungen der Erfindung angegeben.

Die Erfindung geht von einer Sensorvorrichtung zur Identifizierung von insbesondere sich bewegenden Objekten aus.

Der Kern der Erfindung liegt darin, dass ein optischer Sender, ein optischer Reflektor und eine Empfangseinheit vorgesehen sind, wobei der optische Sender Licht aussendet, das spezifisch vorgegebene optische Eigenschaften besitzt, wobei der Reflektor eine optisch aktive Modulationssicht ausbildet und/oder vor dem Reflektor eine optisch aktive Modulationsschicht angeordnet ist, die die spezifischen optischen Eigenschaften, insbesondere die Polarisation und/oder Wellenlänge des an die Empfangseinheit über den Reflektor zurück reflektierten Lichts ändert und wobei der Reflektor am Objekt angeordnet ist.

Die Modulationsschicht kann unmittelbar auf dem Reflektor oder im Abstand zum Reflektor angeordnet sein. Die Modulationsschicht selbst kann als Reflektor wirken. Zum Beispiel sind cholesterische Schichten bekannt, die Licht in einem Wellenlängenbereich spiegeln, das zum Beispiel rechtszirkular polarisiert ist. Auf diese Weise kann der Reflektor über wesentliche Lichtbereiche "unsichtbar" ausgestaltet werden.

Mit einer solchen Anordnung kann somit bewusst das Vorhandensein von sich bewegenden Objekten detektiert werden, die mit einem Reflektor und einer Modulationsschicht ausgestattet sind, zum Beispiel ein Maschinenteil. Des Weiteren können Pakete oder Gegenstände in einem Logistiksystem zum Beispiel auf einem Gabelstapler in einem Lagerhaus identifiziert werden. Grundsätzlich lassen sich auf diese Weise auch Gegenstände, wie zum Beispiel Türen oder Tore identifizieren. Wenn mehrere Empfangseinheiten, zum Beispiel in Form einer Kamera vorgesehen sind, lassen sich eine Vielzahl von Objekten gleichzeitig identifizieren.

Die Identifizierung von Objekten kann vorzugsweise mit einer Zugangskontrolle kombiniert werden. Beispielsweise kann das Objekt ein "Zugangsschlüssel" beziehungsweise "Identifikationsschlüssel" zum Beispiel in Form einer Art Scheckkarte sein, das erfindungsgemäß mit einem Reflektor und einer Modulationsschicht ausgestaltet ist. Wird der Reflektor mit Modulationsschicht erkannt, kann dies als gültige Identifikation von einem entsprechenden System bewertet werden, worauf eine geeignete Aktion, zum Beispiel das öffnen einer Tür eingeleitet wird. Damit lässt sich in einfacher Weise eine Zugangskontrolle realisieren.

Die Empfangseinheit ist vorzugsweise dazu ausgestaltet, nur das in der Modulationsschicht veränderte Licht zu erkennen.

Da die Empfangseinheit "weiß", welche Eigenschaften das Licht aufweist muss, das vom Reflektor auf die Empfangseinheit trifft, kann festgestellt werden, ob das empfangene Licht auch tatsächlich vom Reflektor stammt.

Zum Beispiel kommt vom Sender rechts zirkular polarisiertes Licht. Die Modulationsschicht wandelt das über den Reflektor an die Empfangseinheit gesandte Licht in links zirkular polarisiertes Licht um. Die Empfangseinheit kann nur links zirkular polarisiertes Licht detektieren. Herkömmliche Objekte sind nicht in der Lage links zirkular polarisiertes Licht auszusenden oder rechts zirkular polarisiertes Licht in links polarisiertes Licht umzuwandeln.

Um das Licht zu polarisieren oder die Polarisation des Lichts zu ändern, können eine Vielzahl von unterschiedlichen Techniken zur Anwendung kommen.

Mit cholesterischen Filmen oder Schichten kann vergleichsweise einfach und kostengünstig Licht polarisiert werden. Techniken, die bei Flüssigkristallanzeigen zum Einsatz kommen, können auch eingesetzt werden. Die Modulationsschicht lässt sich dann ggf. elektrisch ansteuern. Die Polarisation des Lichtes oder die Änderung von dessen Polarisation kann an der Senderseite, am Reflektor und/oder auf der Seite der Empfangseinheit erfolgen.

Bei der Verwendung eines cholesterischen Filmes zur Polarisation entsteht rechts zirkular polarisiertes Licht, wobei Licht das nicht den cholesterischen Film durchläuft als links zirkular polarisiertes Licht reflektiert wird. Durch einen Reflektor hinter dem Sender im Zusammenspiel mit einer λ/4-Verzögerungsschicht, z.B. Verzögerungsplatte kann das links zirkular polarisierte Licht in rechts zirkular polarisiertes Licht umgewandelt werden, dass den cholesterischen Film durchlaufen kann.

Auf diese Weise lässt sich unpolarisiertes Licht einer Lichtquelle vollständig in einer Sensorvorrichtung als z.B. rechts zirkular polarisiertes Licht nutzen.

In einer besonders bevorzugten Ausgestaltung der Erfindung ist die Empfangseinheit dazu ausgebildet Muster, z.B. eine Schachbrettstruktur zu erkennen. Vorzugsweise umfasst die Empfangseinheit ein Feld von Empfängern, z.B. matrixförmig angeordnet. Zum Beispiel kommt eine Kamera zur Anwendung. Damit wird es möglich, eine Struktur im Lichtsignal zu erkennen, das von einem Reflektor zur Empfangseinheit gelangt. Eine Struktur kann z.B. dadurch entstehen, dass zur Modulationsschicht, die vor dem Reflektor positioniert ist, links polarisiertes Licht gesendet wird. Die Modulationsschicht ist strukturiert, wobei es beispielsweise Bereiche gibt, die das links polarisierte Licht unverändert zurückreflektieren und Bereiche, die als λ/4-Verzögerungschicht wirken. Vor der Empfangseinheit ist z.B. ein cholesterischer Film angeordnet, der nur für links zirkular polarisiertes Licht durchlässig ist.

Damit wird die Empfangseinheit folgendes Muster erfassen: Licht das ungehindert über den Reflektor zurück an die Empfangseinheit kommt, ist links zirkular polarisiertes Licht und kann den cholesterischen Film vor der Empfangseinheit ungehindert passieren, so dass diese Bereiche hell erscheinen. Links polarisiertes Licht, dass vor dem Reflektor die λ/4-Verzögerungsschicht durchläuft, passiert nach der Reflektion diese Schicht ein zweites Mal, so dass insgesamt eine Phasenverschiebung von λ/2 eintritt, womit aus links zirkular polarisiertem Licht rechts zirkular polarisiertes Licht wird, das den cholesterischen Film vor der Empfangseinheit nicht passieren kann. Diese Bereiche erscheinen dunkel.

Ein solches Muster entsteht nur spezifisch für das links zirkular polarisierte Licht des Senders. Trifft über die Modulationsschicht auf den Reflektor unpolarisiertes Licht ist die Modulationsschicht ohne Wirkung, d.h. deren Struktur ist für die Empfangseinheit nicht ersichtlicht. Es entsteht z.B. ein gleichmäßig helles Bild.

Die Modulationsschicht kann in vielfältiger Weise in optisch aktive und optisch inaktive Bereiche strukturiert werden.

Durch das Strukturieren der optisch aktiven Modulationsschicht kann, z.B. ein zwei- oder dreidimensionaler Barcode realisiert werden, der nur schwer zu kopieren ist. Dieser Barcode ist für einen Empfänger dann nur für das speziell polarisierte Licht erkennbar.

Unterschiedliche Bereiche in der optisch aktiven Modulationsschicht können verschiedene optische Verzögerungen ausbilden, z.B. eine λ/4- oder λ/2-Verzögerungsschicht realisieren sowie verschiedene optische Achsen und/oder Farbfiltereigenschaften besitzen. Auch können Bereiche in der Modulationsschicht das Licht nicht ändern und/oder nur die Richtung des Lichts ändern. Detektiert eine Empfangseinheit empfangenes Licht auf spezifische Eigenschaften, ist es nahezu unmöglich, das vom Reflektor kommende Licht zu kopieren. Damit kann das versehentliche Interpretieren von Drittlicht als reflektiertes Licht oder ein systematischer Kopierversuch zur Überlistung des Systems durch Bereitstellung eines entsprechenden Signals für die Empfangseinheit ausgeschlossen werden.

Zudem ist es denkbar, dass der optische Sender Licht mit unterschiedlichen Wellenlängen bereitstellt, wobei z.B. sich ein durch die Empfangseinheit empfangenes Muster in Abhängigkeit von den unterschiedlichen Wellenlängen, z.B. zwei Wellenlängen ändert. Nur wenn die Empfangseinheit die Muster für die unterschiedlichen Wellenlängen erkennt, kann daraus geschlossen werden, dass die Sensorvorrichtung einen vorgesehenen Signalweg ausbildet.

In einer weiteren vorteilhaften Ausführungsform der Erfindung ist die optisch aktive Modulationsschicht dazu ausgelegt, vorgegebene Wellenlängen stärker zu absorbieren, passieren zu lassen und/oder zu reflektieren.

Beispielsweise ändern fluoreszierende Pigmente, Quantumpartikel oder Nanokristalle die Wellenlänge von durchlaufendem Licht.

Die Empfangseinheit ist vorzugsweise dazu ausgebildet, die Veränderung derartiger optischer Eigenschaften des empfangenen Lichts auswerten zu können.

In einer weiteren besonders bevorzugten Ausgestaltung der Erfindung ist der optische Sender dazu ausgebildet, die Eigenschaften des abgestrahlten Lichts elektrisch angesteuert zu verändern. Beispielsweise werden LEDs eingesetzt, die je nach Ansteuerart Licht mit unterschiedlicher Wellenlänge emitieren. Auch können LEDs, Laserdioden VCSELs oder ähnliche Komponenten zum Einsatz kommen, die einen relativ großen Teil des Lichts polarisiert ausstrahlen. Ebenfalls denkbar ist der Einsatz einer Flüssigkristallschicht, die in Abhängigkeit Ihres Ansteuerzustandes die Polarisation des Lichtes unterschiedlich beeinflusst, d.h. z.B. gar nicht beeinflusst oder polarisiert.

Wenn genau ein optischer Sender zum Einsatz kommt, ist vorzugsweise die Empfangeinheit in der Lage Strukturen und Muster zu erkennen. Kommt andererseits genau ein optischer Empfänger zur Anwendung, ist es bevorzugt, wenn der optische Sender Licht mit unterschiedlichen optischen Eigenschaften insbesondere im Zeitmultiplex aussenden kann.

Durch Variation des ausgesandten Lichtes kann eine dazu passende spezifische Antwort von einem optischen Empfänger ausgewertet werden, die er nur durch die spezielle Kombination des vom Sender ausgesandten Lichtes mit der Modulationsschicht erhält.

Im Weiteren ist es bevorzugt, wenn die Modulationsschicht mehrere optisch unterschiedlich aktive Lagen übereinander liegend besitzt.

Damit können in der Modulationsschicht unterschiedliche optische Eigenschaften verändert werden. Beispielsweise kann die Modulationsschicht eine Filterschicht umfassen und/oder Schichten die in unterschiedlicher Weise eine Verzögerung bewirken. Eine Modulationsschicht kann auch eine oder mehrere optisch inaktive Schichten umfassen, die beispielsweise als Trägerschichten oder als Schichten eingesetzt werden, die notwendig sind, um darauf in gewünschter Weise und Qualität eine optisch aktive Schicht aufbauen zu können. Solche Schichten stellen dann bevorzugt ein gewünschtes Grenzflächenverhalten zu der angrenzenden Schicht bereit. Außerdem günstig ist es, wenn die optische Modulationsschicht z.B. eine LCP oder LPP Schicht umfasst. LCP steht für Flüssigkristallpolymer. LPP ist die Abkürzung für linear photo polymerizable.

Um eine noch größere Sicherheit der Sensorvorrichtung zu erreichen, wird außerdem vorgeschlagen, dass Mittel vorgesehen sind, durch die sich die optischen Eigenschaften des optischen Senders und/oder der Modulationsschicht über die Zeit gesteuert ändern. Damit wird es nahezu unmöglich eine "Kopie" der Modulationsschicht oder grundsätzlich eines zurückreflektierten Lichtstrahls zu erstellen, die der Empfangseinheit als ein vom Sender ausgesandtes Signal genügt.

Außerdem ist es bevorzugt, wenn eine zusätzliche Filtereinheit vorgesehen ist, um einen vorgegebenen Wellenlängenbereich, insbesondere sichtbares Licht zu blockieren, reflektieren und/oder modifizieren. Sofern das in der Sensorvorrichtung verwendete Licht für den Menschen sichtbar ist, lässt sich leichter das System durch Kopieren einer Modulationsschicht mit Reflektor oder durch das Einblenden eines geeigneten Lichtstrahls auf die Empfangseinheit "überlisten". Dies ist insbesondere dann von Nachteil, wenn die Sensorvorrichtung als Identifikationsvorrichtung verwendet wird.

Findet eine Auswertung der Empfangseinheit z.B. im nicht sichtbaren Infrarotbereich statt, ist eine solche Möglichkeit von vornherein ausgeschlossen.

Außerdem ist es bevorzugt, wenn der Reflektor ebenfalls dazu ausgelegt ist, die optischen Eigenschaften des reflektierten Lichts zu ändern. Beispielsweise polarisiert der optische Reflektor das Licht.

Ein solcher Reflektor kann zusätzlich in dem System aus optischen Sender, Modulationsschicht und Empfangseinheit vorgesehen sein.

Als Reflektor kann z.B. auch ein Retroreflektor bzw. eine Retrofolie vorgesehen werden. Grundsätzlich ist jedoch jede Art von Reflektor oder Spiegel geeignet.

In einer besonders bevorzugten Ausgestaltung der Erfindung ist der optische Sender dazu ausgelegt, gleichzeitig Licht mit unterschiedlichen optischen Eigenschaften auszusenden. Sowohl für das Licht mit der einen oder anderen optischen Eigenschaft kann die Reflexion eines Reflektors vergleichsweise schwach sein, wogegen für Licht mit den kombinierten optischen Eigenschaften ein vergleichsweise starkes Reflexionssignal zustande kommt. Damit kann man auf vergleichsweise einfache Art einen Reflektor, dessen Position nicht exakt bekannt ist bzw. auf den der Lichtstrahl noch nicht exakt ausgerichtet ist, lokalisieren.

In dem Fall, in dem die Modulationsschicht strukturiert bzw. mit einem Muster versehen ist, können die Strukturen z.B. Ein- oder Zweidimensional sein, mit einer Auflösung in einem Bereich von < 10mm, < 5mm, < 2mm oder < 1 mm, ggf. mit noch kleinerer Auflösung. Damit lassen sich komplexe Identifikationsmuster bilden, die nur schwer zufällig oder auch systematisch kopierbar sind. Das verbessert die Sicherheit.

Grundsätzlich reichen in einem solchen Fall vergleichsweise kleine Bereiche zur Veränderung des Lichts an einer Modulationsschicht, in der Größenordnung von z.B. 10 auf 10 mm.

Für den Fall das ein Retroreflektor als Reflektor zur Anwendung kommt, können pyramidenförmige Strukturen für die Reflektion von Licht vorgesehen sein, wobei eine Strukturierung einer Modulationsschicht in einer Weise denkbar ist, dass auf unterschiedlichen Seiten der Pyramidenstrukturen eine unterschiedliche Veränderung des Lichtes stattfindet.

In einer weiteren besonders bevorzugten Ausgestaltung der Erfindung können zusätzliche Identifikationsmittel vorgesehen sein, um ein Objekt zu detektieren. Auf diese Weise kann die Sicherheit weiter erhöht werden. Dabei können auch nicht sichere Methoden für die Objekterkennung mit der erfindungsgemäßen Vorgehensweise kombiniert werden, was insgesamt die Sicherheit verbessert.

Dabei lassen sich eine Vielzahl bekannter Identifikationsmöglichkeiten mit der erfindungsgemäßen Vorrichtung kombinieren, wie z.B. RFIDs, Magnetstreifen, Lochkarten oder ähnliches.

Dadurch kann ein vergleichsweise hoher Sicherheitsgrad erreicht werden, da ein unabsichtliches oder auch systematisches Kopieren eines Identifikationssignals quasi unmöglich wird.

Bei der Verwendung der Sensorvorrichtung in Zutrittssystemen bestehen Anwendungsmöglichkeiten z.B. in Hotels oder Krankenhäusern. Grundsätzlich kann die Sensorvorrichtung auch dazu verwendet werden, den Aufenthaltsort von Personen zu erfassen.

Die Vorrichtung kann auch im Zusammenspiel mit 3D-Sensoren eingesetzt werden, die z.B. nach dem Prinzip von Triangulation, Laufzeit, der Auswertung einer Phasenbeziehung arbeiten oder das Stereoprinzip nutzen. So wie bei allen optischen Sensoren, können auch Sende- und Empfangsoptiken, die auf totaler interner Reflektion (TIR) basieren, zur Anwendung kommen.

Ein wesentlicher weiterer Aspekt der Erfindung bezieht sich auf einen optischen Schlüssel mit einem Reflektor und einer optisch aktiven Modulationsschicht bzw. mit einem Reflektor, der eine optisch aktive Modulationsschicht ausbildet, für eine oben beschriebene Sensorvorrichtung.

Außerdem wesentlich für die Erfindung ist ein optischer Schlüssel mit einem nicht flüchtigen Display, in welchem auf elektronischem Wege Bildinformationen in einem Anzeigebereich sichtbar eingeschrieben werden können, wobei die eingeschriebenen Bildinformationen auf dem Anzeigebereich auch in einem stromlosen Zustand des Displays erhalten bleiben, und wobei die Bildinformation im Anzeigebereich durch andere Bildinformationen auf elektronischem Wege ersetzbar sind. Des Weiteren umfasst der optische Schlüssel Reflexionsmittel. Das nicht flüchtige Display kann eine Modulationsschicht mit Reflektor oder nur die Modulationsschicht ausbilden. Das nicht flüchtige Display hat den Vorteil, dass Informationen sich verschlüsselt auf dem Schlüssel befinden können. Zur Detektion eines derartigen Schlüssels muss keine speziell auf den Schlüssel programmierte Kamera zur Anwendung kommen. Vielmehr ist es ausreichend, wenn die Kamera Informationen auf den Schlüssel, die von Schlüssel zu Schlüssel unterschiedlich sein können, auswerten kann. Beispielsweise soll eine Kamera I einer Person den Zutritt gewähren, wogegen eine Kamera 11 oder 111 einen Zutritt verweigert. Die Kameras müssen dazu nicht miteinander kommunizieren. Es genügt, wenn die notwendigen Informationen auf dem Schlüssel von den Kameras ausgelesen werden, um abhängig davon dann eine Aktion zuzulassen oder nicht zuzulassen.

Das nicht flüchtige Display kann somit alle Sicherheitsmerkmale enthalten, die für eine Identifizierung, Autorisierung oder eine Zutrittsberechtigung notwendig sind.

Eine Auswerteeinrichtung einer Kamera kann vorzugsweise einen Code auf einem Schlüssel, zum Beispiel eine Identifikationsnummer umfassen. Geht der optische Schlüssel verloren oder wird gestohlen, ist es bevorzugt, wenn die Auswerteeinheit dazu ausgebildet ist, diesen Code zu sperren bzw. den Code zu ändern, um zum Beispiel Zutritt mit dem verloren gegangenen oder gestohlenen optischen Schlüssel zu verhindern.

### Zeichnungen

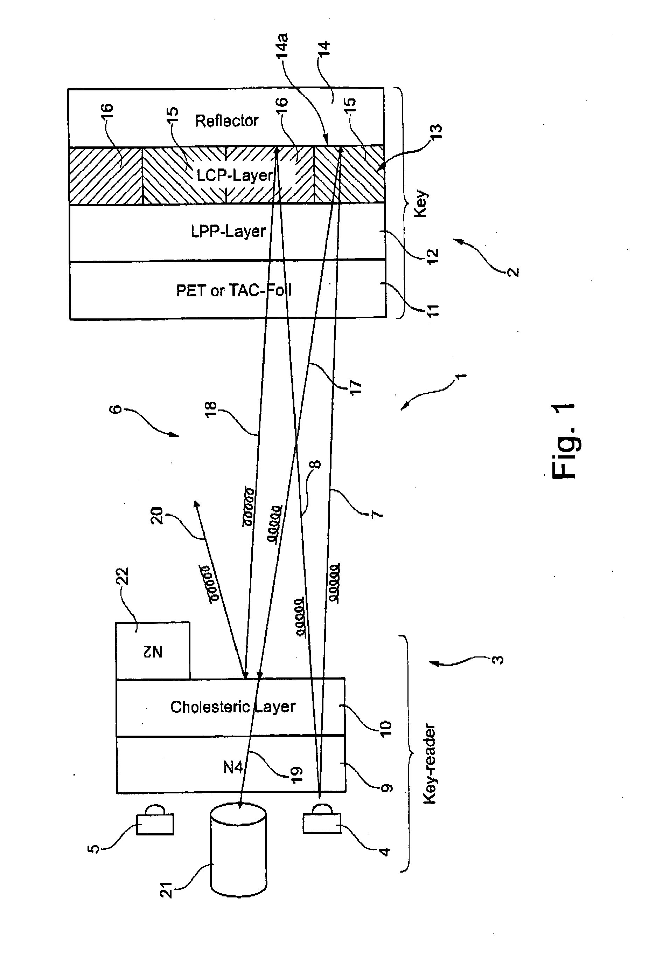

Ein Ausführungsbeispiel der Erfindung ist in der nachfolgenden Zeichnung unter Angabe von weiteren Vorteilen, Einzelheiten näher erläutert. Die Figur zeigt in einem schematischen Schnittbild eine erfindungsgemäße Sensorvorrichtung zur Identifizierung mit optischen Sender, Modulationsschicht, Reflektor sowie Empfangseinheit.

### Beschreibung der Ausführungsbeispiele

In der Figur ist eine Sensorvorrichtung 1 dargestellt, die eine Schlüsseleinheit 2 umfasst, die auch als optischer Schlüssel bezeichnet werden kann sowie eine Schlüsselleseeinheit 3, die in der Lage ist, Licht auszusenden, und das von der Schlüsseleinheit 2 kommende Licht zu detektieren.

Licht kann z.B. von 2 LEDs 4, 5 ausgesandt werden, wobei ein Lichtweg lediglich für die LED 4 exemplarisch durch Pfeile 6 symbolisiert ist.

Licht (siehe Pfeile 7, 8) das von der LED 4 kommt, passiert zunächst eine λ/4-Verzögerungsschicht 9, auf welche eine cholesterische Schicht 10 folgt. Die cholesterische Schicht

10 lässt lediglich rechts zirkular polarisiertes Licht durch, wogegen links zirkular polarisiertes Licht reflektiert wird.

Das Licht trifft auf die Schlüsseleinheit 2, wobei auf einer Trägerfolie bzw. Schicht 11 aus z.B. TAC oder PET und einer weiteren Schicht 12, z.B. einer LPP-Schicht eine LCP-Schicht 13 (Liquid Crystal Polymer) aufgebracht ist, bevor eine Reflektionsoberfläche 14a eines Reflektors 14 folgt. Sowohl die Trägerschicht 11 als auch die Schicht 12 sind optisch nicht aktiv. Die LCP-Schicht ist strukturiert in Bereiche 15 und 16, wobei die Bereiche 15 keine und die Bereiche 16 keine Verzögerung des Lichts von λ/4 bewirken. Da das Licht, nach dem es die LCP-Schicht durchlaufen hat, am Reflektor 14 reflektiert wird, durchläuft es die LCP-Schicht zweimal, wodurch in den Bereichen 16 eine Verzögerung von λ/2 auftritt.

Die Wirkung der LCP-Schicht ist wellenlängenabhängig, sodass eine Verzögerung von λ/4 auf die Wellenlänge abgestimmt werden muss.

Durch die Verzögerung von λ/2 von Licht, dass die Bereiche 16 zweimal durchläuft, wird aus dem rechts zirkular polarisiertem Licht links zirkular polarisierten Licht. Das hat zur Folge, dass Licht, welches am Reflektor 14 reflektiert wird (siehe Pfeile 17 und 18), wenn es vom Bereich 15 stammt links zirkular polarisiert ist und wenn es vom Bereich 16 stammt rechts zirkular polarisiert ist. Trifft dieses Licht auf die Schlüsselleseeinheit 3 bzw. deren cholesterischer Schicht 10 kann daher Licht aus dem Bereich 15 die cholesterische Schicht durchlaufen, während Licht aus dem Bereich 16 an dieser reflektiert wird. Denn die cholesterische Schicht lässt lediglich rechts zirkular polarisiertes Licht passieren.

Dies symbolisieren die Pfeile 19 und 20.

Eine Kamera 21 sieht somit die Bereiche 15 hell und die Bereiche 16 dunkel.

Kommt die LED 5 zum Einsatz, ist nach der cholesterischen Schicht 10 noch eine λ/2-Verzögerungsschicht 22 vorgesehen. Das hat zur Folge, dass das in der cholesterischen Schicht rechts zirkular polarisierte Licht in links zirkular polarisiertes Licht umwandelt wird, mit der weiteren Folge, dass in den Bereichen 15 links zirkular polarisiertes Licht an die cholesterische Schicht 10 zurückreflektiert wird. In den Bereichen 16 entsteht hingegen rechts zirkular polarisiertes Licht, das den cholesterischen Film 10 durchlaufen kann und somit für die Kamera sichtbar ist. Im Ergebnis invertiert sich auf diese Weise die hell dunkel Darstellung der Bereiche 15 und 16 in der Kamera 21 verglichen zum Licht des Senders 4.

Beide Lichtwege können im Zeitmultiplex aktiviert werden, wodurch eine Invertierung des von der Kamera detektierten Bildes stattfindet. Lediglich wenn die Kamera eine derartige Bildveränderung wahrnimmt, kann z.B. ein Signal generiert werden: "System ok". Oder es kann festgestellt werden: "Identifikation ist erfolgreich". Wird z.B. der Lichtweg 6 unterbrochen, bzw. ein Spiegel in den Lichtweg 6 gehalten, kann die Kamera das Muster der LCP Schicht 13 nicht mehr detektieren, was einen Sicherheitsmodus auslösen kann. Andererseits wird das System durch Fremdlicht im Wesentlichen nicht gestört.

Durch eine Codierung des reflektierten Lichtes ist somit eine hohe Sicherheit im Hinblick auf Fehldetektion realisierbar.

## Patentansprüche

**1.** Sensorvorrichtung (1) zur Identifizierung von Objekten, **gekennzeichnet durch** einen optischen Sender (4, 5, 9, 10, 22), einem Reflektor (14, 14a) und einer Empfangseinheit (9, 10, 21), wobei der optische Sender (4, 5, 9, 10, 22) Licht aussendet, das spezifisch vorgegebene optische Eigenschaften besitzt, wobei der Reflektor eine optisch aktive Modulationsschicht ausbildet und/oder vor dem Reflektor (14) eine optisch aktive Modulationsschicht (13) angeordnet ist, die die spezifischen optischen Eigenschaften, insbesondere die Polarisation und/oder Wellenlänge des an die Empfangseinheit (9, 10, 21) über den Reflektor (14, 14a) zurückreflektierten Lichts ändert, und wobei der Reflektor am Objekt angeordnet ist.

**2.** Sensorvorrichtung nach Anspruch 1, **dadurch gekennzeichnet, dass** die Empfangseinheit (9, 10, 21) ausgebildet ist, Muster zu erkennen.

**3.** Sensorvorrichtung nach einem der vorhergehenden Ansprüche, **dadurch gekennzeichnet, dass** die optisch aktive Modulationsschicht (13) optisch nicht aktive Bereiche (15) enthält.

**4.** Sensorvorrichtung nach einem der vorhergehenden Ansprüche, **dadurch gekennzeichnet, dass** die optisch aktive Modulationsschicht dazu ausgelegt ist, vorgegebene Wellenlängen stärker zu absorbieren, passieren zu lassen und/oder zu reflektieren.

**5.** Sensorvorrichtung nach einem der vorhergehenden Ansprüche, **dadurch gekennzeichnet, dass** der optische Sender (4, 5, 9, 10) dazu ausgebildet ist, die Eigenschaften des abgestrahlten Lichts elektrisch angesteuert zu ändern.

**6.** Sensorvorrichtung nach einem der vorhergehenden Ansprüche, **dadurch gekennzeichnet, dass** genau ein optischer Sender vorgesehen ist.

**7.** Sensorvorrichtung nach einem der vorhergehenden Ansprüche, **dadurch gekennzeichnet, dass** genau ein optischer Empfänger vorgesehen ist.

**8.** Sensorvorrichtung nach einem der vorhergehenden Ansprüche, **dadurch gekennzeichnet, dass** die Modulationsschicht mehrere unterschiedliche optisch aktive Lagen übereinander besitzt.

**9.** Sensorvorrichtung nach einem der vorhergehenden Ansprüche, **dadurch gekennzeichnet, dass** die Modulationsschicht eine LCP-Schicht umfasst.

**10.** Sensorvorrichtung nach einem der vorhergehenden Ansprüche, **dadurch gekennzeichnet, dass** Mittel vorgesehen sind, durch die sich die optischen Eigenschaften des Lichts des optischen Senders und/oder der Modulationsschicht über die Zeit gesteuert ändern lassen.

**11.** Sensorvorrichtung nach einem der vorhergehenden Ansprüche, **dadurch gekennzeichnet, dass** eine Filtereinheit vorgesehen ist, um einen vorgegebenen Wellenlängenbereich zu blockieren.

**12.** Sensorvorrichtung nach einem der vorhergehenden Ansprüche, **dadurch gekennzeichnet, dass** der optische Sender dazu ausgelegt ist, gleichzeitig Licht mit unterschiedlichen spezifischen optischen Eigenschaften auszusenden.

**13.** Sensorvorrichtung nach einem der vorhergehenden Ansprüche, **dadurch gekennzeichnet, dass** der Reflektor ein Retroreflektor umfasst.

**14.** Sensorvorrichtung nach einem der vorhergehenden Ansprüche, **dadurch gekennzeichnet, dass** eine zusätzliche Identifikationseinheit vorgesehen ist.

**16.** Optischer Schlüssel mit einem Reflektor und einer optisch aktiven Modulationsschicht oder einem Reflektor, der eine optisch aktive Modulationsschicht ausbildet, für eine Sensorvorrichtung nach einem der vorhergehenden Ansprüche.

**17.** Optischer Schlüssel mit einem nicht flüchtigen Display, bei welchem auf elektronischem Wege Bildinformationen in einen Anzeigebereich eingeschrieben werden können, wobei die eingeschriebenen Bildinformationen auf dem Anzeigebereich auch in einem stromlosen Zustand des Displays erhalten bleiben, und wobei die Bildinformationen im Anzeigebereich durch andere Bildinformationen auf elektronischem Wege ersetzbar sind, und Reflexionsmittel, insbesondere für eine Sensorvorrichtung nach einem der vorhergehenden Ansprüche.
